# EUROPEAN PATENT APPLICATION

(11) **EP 4 748 666 A1**
(43) Date of publication of application: **27.05.2026**
(21) Application number: 25210079.7
(22) Date of filing: 21.10.2025
(51) Int. Cl.: B60T 11/00, B60T 13/12, B60T 13/68, B60T 7/04

(54) **TRACTOR**

(30) Priority: 20.11.2024 IT 202400026133
(71) Applicant: Same Deutz-Fahr Italia S.p.A., 24047 Treviglio (Bergamo) (IT)
(72) Inventor: MILLER, Florian, 24047 Treviglio (Bergamo) (IT); FISCHBACH, Konrad, 24047 Treviglio (Bergamo) (IT); AGOSTI, Francesco, 24047 Treviglio (Bergamo) (IT); GAVINA, Giorgio, 24047 Treviglio (Bergamo) (IT); BASSANI, Marco, 24047 Treviglio (Bergamo) (IT)
(74) Representative: Gamba, Alessandro

(57) **Abstract**

The invention is a tractor (1) comprising a front axle (2) comprising two front wheel groups (21, 22) and a rear axle (3) comprising two rear wheel groups (31, 32).

The tractor (1) also comprises a drive system (4) operatively connected to the front wheel groups (21, 22) and to the rear wheel groups (31, 32) for transmitting motion thereto.

Furthermore, the tractor (1) comprises a braking system (5) comprising:
i) a pair of front brake groups (521, 522), each comprising a front disc (5210, 5220) engaged with a respective front wheel group (21, 22), and a front caliper (5211, 5221) operating on the front disc (5210, 5220);
ii) a pair of rear brake groups (531, 532), each comprising a rear disc (5310, 5320) engaged with a respective rear wheel group (31, 32), and a rear caliper (5311, 5321) operating on the rear disc (5310, 5320);
iii) control means (6) comprising:
- a pedal group (7);
- a front hydraulic circuit (82) operatively connected to the pair of front calipers (5211, 5221);
- a rear hydraulic circuit (83) operatively connected to the pair of rear calipers (5311, 5321);
- a valve group (9) operatively connected to the pedal group (7) and fluidically connected to the two distinct circuits, namely the front hydraulic circuit (82) and the rear hydraulic circuit (83), so as to receive the actuation of the pedal group (7) and to transmit the braking action to the front hydraulic circuit (82) and to the rear hydraulic circuit (83).

## Description

The subject of the present invention is a tractor.

In the following description, the term "tractor" refers to large-sized vehicles generally intended for performing power operations.

The expression "wheel group" is intended to include all types of wheels, without limitation as to the type of tire and rim, whether single or twin.

In the known art, tractors suitable for movement on roads or on work surfaces are known. Preferably, such tractors are also connectable to appropriate trailers.

In the prior art, considerable attention has been devoted to the modes of movement of the tractor, and of particular importance are also the braking and/or parking modes of the tractor.

In particular, the movement, braking, and parking of the tractor must be carried out with maximum effectiveness and efficiency, while ensuring maximum safety for the user of the tractor. That is to say, the tractor must meet specific user requirements while fully complying with applicable industry regulations.

The purpose of the present invention is to provide a tractor in which all the above-mentioned aspects and requirements are fully and satisfactorily addressed.

This purpose is achieved by a tractor constructed in accordance with claim 1. The dependent claims describe additional preferred embodiments.

The characteristics and advantages of the tractor according to the present invention will become apparent from the following description, provided by way of example and not limitation, with reference to the accompanying figures, in which:

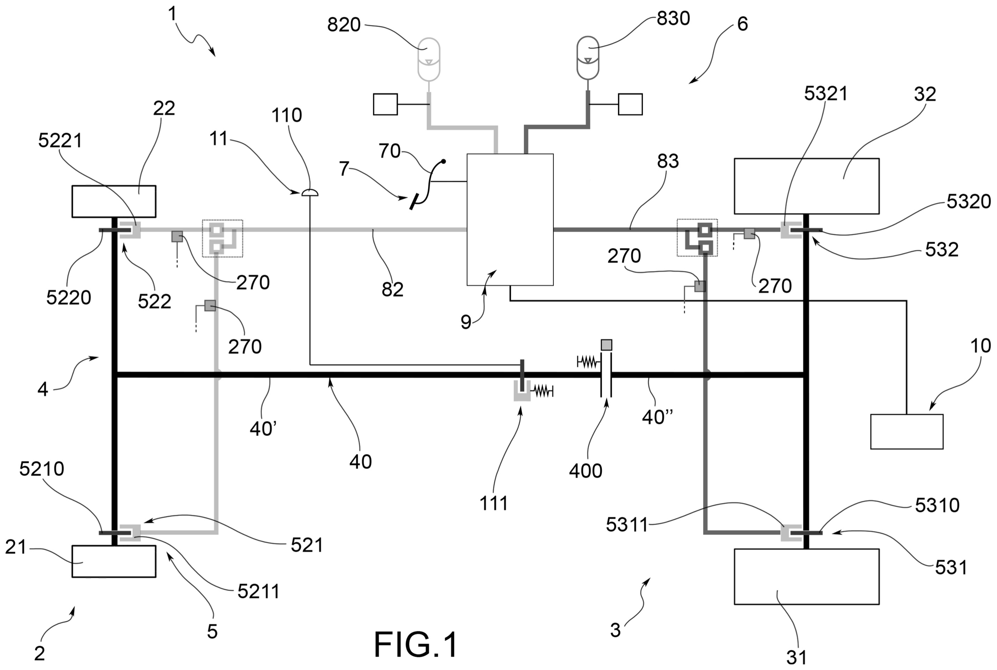

- Figure 1 shows a schematic representation of the tractor according to the present invention;

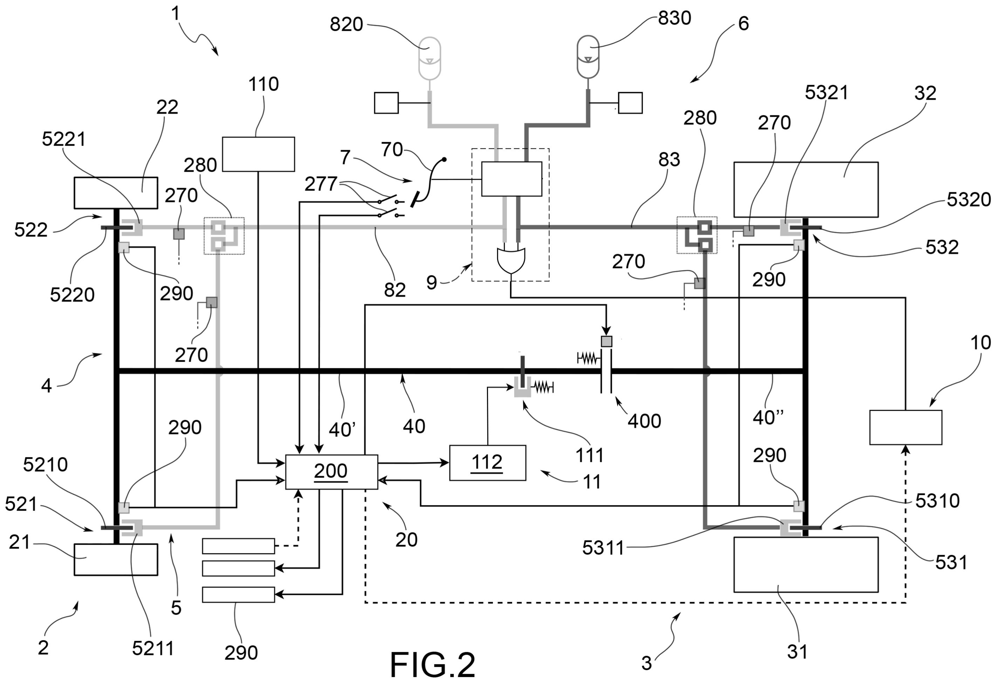

- Figure 2 shows a further schematic representation of the tractor according to the present invention.

With reference to the accompanying figures, the tractor as a whole is denoted by number 1.

Preferably, the tractor 1 has a longitudinal axis along the direction of straight-line advancement, thereby defining a front region and a rear region.

The tractor 1 comprises a front axle 2 comprising two front wheel groups 21, 22, a left one and a right one.

The tractor 1 comprises a rear axle 3 comprising two rear wheel groups 31, 32, a right one and a left one.

Preferably, the front axle 2 is steerable.

Preferably, the rear axle 3 is steerable.

Preferably, the steering modes of the front axle 2 and/or the rear axle 3 do not limit the present invention.

According to a preferred embodiment, the front wheel groups 21, 22 are suspended.

Preferably, the suspension modes of the front axle 2 and the rear axle 3 do not limit the present invention.

According to the present invention, the tractor 1 comprises a drive system 4 operatively connected to the front wheel groups 21, 22 and to the rear wheel groups 31, 32 for transmitting motion thereto.

In other words, the tractor 1 is an all-wheel-drive vehicle. Specifically, upon user command, the tractor 1 is suitable for moving with all four driving wheel groups. Preferably, upon user command, the tractor 1 is suitable for moving with a single driving axle, in particular the rear drive axle.

According to a preferred embodiment, the drive system 4 comprises a drive device suitable for producing a driving action, for example one or more combustion engines or hybrid or electric motors.

Furthermore, according to a preferred embodiment, the drive system 4 comprises a drive shaft 40. Preferably, said drive shaft 40 is engaged with the front axle 2 and the rear axle 3.

According to a preferred embodiment, the drive shaft 40 comprises a coupling member 400 which, in a closed configuration, transmits the driving action produced by the drive device to the drive shaft 40 and thus to the front axle 2 and the rear axle 3.

According to a preferred embodiment, the coupling member 400 is a clutch
Preferably, the drive shaft 40 comprises a front shaft 40' operatively connected to the front axle 2, and a rear shaft 40" operatively connected to the rear axle 3.

According to a preferred embodiment, the front shaft 40' and the rear shaft 40'' are mutually connected by said coupling member 400.

According to the present invention, the tractor 1 comprises a braking system 5 comprising a pair of front brake groups 521, 522 and a pair of rear brake groups 531, 532.

Each front brake groups 521, 522 comprises a front disc 5210, 5220 engaged with a respective front wheel groups 21, 22 for rotating in unison.

Furthermore, each front brake group 521, 522 comprises a front caliper 5211, 5221 operating on the front disc 5210, 5220. In particular, by commanding the closure of the front caliper 5211, 5221, the rotation of the front disc 5210, 5220, and thus of the respective front wheel 21, 22, is slowed or prevented.

Each rear brake group 531, 532 comprises a rear disc 5310, 5320 engaged with a respective rear wheel group 31, 32 for rotating in unison.

Furthermore, each rear brake group 531, 532 comprises a rear caliper 5311, 5321 operating on the rear disc 5310, 5320. In particular, by commanding the closure of the rear caliper 5311, 5321, the rotation of the rear disc 5310, 5320, and thus of the respective rear wheel 31, 32, is slowed or prevented.

According to the above, the front brake groups 521, 522 and the rear brake groups 531, 532 are dry brakes. This means that the calipers operate directly on the respective discs.

Furthermore, the braking system 5 comprises control means 6 comprising a pedal group 7 operable by the user.

In a preferred embodiment, the pedal group 7 comprises a single brake pedal 70.

In other words, the pedal group 7 comprises only one pedal, namely the single brake pedal 70, which is suitable for being pressed by the user to perform the braking action.

According to the present invention, the braking system 5 also comprises a front hydraulic circuit 82 operatively connected to the pair of front calipers 5211, 5221, and a rear hydraulic circuit 83 operatively connected to the pair of rear calipers 5311, 5321.

Preferably, the front hydraulic circuit 82 comprises a front hydraulic accumulator 820.

Preferably, the rear hydraulic circuit 83 comprises a rear hydraulic accumulator 830.

In other words, the braking system 5 comprises two distinct circuits.

In other words, the two distinct circuits do not influence each other.

Preferably, the two hydraulic circuits are designed and calibrated according to requirements and according to the desired front braking action and the desired rear braking action, i.e. as a function of the size of the discs and calipers.

According to the present invention, the braking system 5 comprises a valve group 9 operatively connected to the pedal group 7 and fluidically connected to the two distinct circuits, namely the front hydraulic circuit 82 and the rear hydraulic circuit 83.

In particular, said valve group 9 is suitable, as described below, for effectively managing the circulation of oil in the front hydraulic circuit 82 and/or in the rear hydraulic circuit 83.

The valve group 9 therefore receives the actuation of the pedal group 7 and transmits the braking action in the front hydraulic circuit 82 and in the rear hydraulic circuit 83.

According to a preferred embodiment, the valve group 9 is configured to control the braking action to the rear hydraulic circuit 83 and/or to the front hydraulic circuit 82 depending on the needs or the motion or parking conditions of the vehicle.

By way of example, it is noted that in the event of a malfunction of the pair of front brake groups 521, 522, in the above situation the valve group 9 controls the rear hydraulic circuit 83 to carry out the braking action.

According to a preferred embodiment, the valve group 9 is of the type comprising a plurality of valve members depending on the number of hydraulic circuits connected thereto. Preferably, the valve group 9 comprises a valve member suitable for managing the oil circulation in the front hydraulic circuit 82 and a valve member suitable for managing the oil circulation in the rear hydraulic circuit 83.

According to a preferred embodiment, the tractor 1 further comprises an auxiliary hydraulic circuit 10 connectable to a trailer for transmitting the braking action thereto. According to a preferred embodiment, the trailer comprises a dedicated braking valve group connectable to said auxiliary hydraulic circuit 10 for receiving the braking action.

Preferably, said auxiliary hydraulic circuit 10 is operatively connected to the front hydraulic circuit 82 and to the rear hydraulic circuit 83.

According to a preferred embodiment, the auxiliary hydraulic circuit 10 transmits the braking action to the auxiliary hydraulic circuit 10 by drawing from the hydraulic actuation of the front hydraulic circuit 82 or that of the rear hydraulic circuit 83 whichever is larger.

According to a preferred embodiment, the valve group 9 is fluidically connected to the auxiliary hydraulic circuit 10 so as to receive the actuation of the pedal group 7.

According to a preferred embodiment, the auxiliary hydraulic circuit 10 receives the actuation through the control unit 200.

Preferably, the valve group 9 comprises a valve member suitable for managing the circulation of oil in the auxiliary hydraulic circuit 10 as a function of the command applied to the front hydraulic circuit 82 and to the rear hydraulic circuit 83.

According to a preferred embodiment, the tractor 1 further comprises parking brake means 11 operating with the drive system 4 to prevent the transmission of motion to the front wheel groups 21, 22 and to the rear wheel groups 31, 32.

Preferably, the parking brake means 11 comprise a control element 110, for example a button or a lever, actuatable by the user, and a drum group 111 engaged with the drive shaft 40.

Preferably, upon actuation of the control element 110, the drum group 111 is configured in a closed configuration that prevents rotation of the drive shaft 40.

According to a preferred embodiment, the parking brake means 11 comprise a hydraulic parking circuit 112, and the drum group 111 is configured in a normal braking condition and can be controlled to an open position by a hydraulic action of the hydraulic circuit 112.

According to a preferred embodiment, in the absence of hydraulic action from the hydraulic circuit 112, the drum group 111 is configured in a normal braking condition, i.e. it is closed, and therefore performs the braking action.

According to a preferred embodiment, the parking brake means 11 are suitable for operating with the coupling member 400 in a closed configuration. That is to say, the parking brake means 11 are suitable for operating following the closure of the coupling member 400 so as to apply the parking action both on the front shaft 40' and on the rear shaft 40".

According to a preferred embodiment, the tractor 1 comprises a control system 20 which comprises a control unit 200, ECU or control module. Preferably, said control system 20 is operatively connected to the braking system 5 to control the braking action of the tractor 1.

According to a preferred embodiment, said control system 20 is operatively connected to the valve group 9.

According to a preferred embodiment, said control system 20 is operatively connected to the parking brake means 11.

According to a preferred embodiment, said control system 20 is operatively connected to the auxiliary hydraulic circuit 10.

According to a preferred embodiment, the control system 20 also comprises pressure sensors 280 suitable for detecting the pressure of the front hydraulic circuit 82 and the pressure of the rear hydraulic circuit 83. Preferably, the pressure sensors 280 are suitable for detecting the distinct pressures of the distinct circuits.

Preferably, said pressure sensors are at least two, one operatively connected to the front hydraulic circuit 82 and one operatively connected to the rear hydraulic circuit 83.

Preferably, each branch comprises a respective pressure sensor.

According to a preferred embodiment, the control system 20 also comprises solenoid valves 280 suitable for adjusting the right and left actuations.

According to a preferred embodiment, the control system 20 comprises at least two pedal position sensors 277 engaged with the pedal group 7, in particular with the single pedal 70, suitable for detecting the pressure applied by the user on the single pedal 70. Preferably, said two pedal position sensors 277 operate in parallel with the pedal 70. Preferably, each pedal position sensor 277 is a switch.

According to a preferred embodiment, the control system 20 also comprises a speed sensor 290.

Preferably, the detection of vehicle speed by means of the speed sensor 290 provides an input to the control system 20, through which it commands an action of the braking system 5.

Innovatively, the tractor forming the subject of the present invention allows the achievement of the intended purpose of the invention.

Advantageously, the tractor performs effective, efficient, and safe braking.

Advantageously, the tractor allows simple management of front and rear braking.

Advantageously, the tractor has, for each wheel group, a respective brake group.

Advantageously, the brake groups are dry brakes.

Advantageously, the brake groups are easy to position and easy to manage.

Advantageously, the tractor efficiently manages hazardous situations.

Advantageously, the tractor is suitable for performing "intelligent" braking actions: for example, the tractor is suitable for performing a safe braking action without locking or skidding, that is, in an ABS mode; for example, the tractor is suitable for performing a safe braking action without imbalance between right and left wheels, that is, in an ESP mode.

Advantageously, the tractor manages the malfunction of one of the two hydraulic circuits by performing the braking action with the remaining circuit.

Advantageously, the tractor also efficiently manages the braking action of the trailer.

Advantageously, the tractor performs a braking action of the trailer by utilizing the greater braking action, either the front or the rear one.

Advantageously, the tractor provides an effective and safe locking or parking action.

Advantageously, the parking means operate directly on the transmission system, inhibiting its actuation and preventing the rotation of the drive shaft, which, being connected to both the front and rear axles, blocks the rotation of all four-wheel groups.

Advantageously, the tractor comprises a control system suitable for detecting possible malfunctions or failures.

Advantageously, the tractor comprises a control system suitable for allowing braking as a function of the tractor's speed and/or as a function of possible issues.

Advantageously, the tractor offers a high level of driving comfort.

It is clear that a person skilled in the art, in order to meet contingent requirements, may make modifications to the invention, all of which fall within the scope of protection defined by the following claims.

## Claims

1. A tractor (1) comprising a front axle (2) comprising two front wheel groups (21, 22) and a rear axle (3) comprising two rear wheel groups (31, 32), a drive system (4) operatively connected to the front wheel groups (21, 22) and the rear wheel groups (31, 32) for transmitting motion thereof, and a braking system (5) comprising:
i) a pair of front brake groups (521, 522), each front brake group (521, 522) comprising a front disc (5210, 5220) engaged with a respective front wheel group (21, 22) for rotating in unison, and a front caliper (5211, 5221) operating on the front disc (5210, 5220);
ii) a pair of rear brake groups (531, 532), each rear brake group (531, 532) comprising a rear disc (5310, 5320) engaged with a respective rear wheel group (31, 32) for rotating in unison, and a rear caliper (5311, 5321) operating on the rear disc (5310, 5320);
iii) control means (6) comprising:
- a pedal group (7) operable by the user;
- a front hydraulic circuit (82) operatively connected to the pair of front calipers (5211, 5221);
- a rear hydraulic circuit (83) operatively connected to the pair of rear calipers (5311, 5321);
- a valve group (9) operatively connected to the pedal group (7), and fluidly connected to the two distinct said front hydraulic circuit (82) and rear hydraulic circuit (83) so as to receive the actuation of the pedal group (7) and to transmit the braking action in the front hydraulic circuit (82) and the rear hydraulic circuit (83).

2. Tractor (1) according to claim 1, wherein the front hydraulic circuit (82) comprises a front accumulator (820) and the rear hydraulic circuit (83) comprises a rear hydraulic accumulator (830).

3. Tractor (1) according to claim 1, wherein the valve group (9) is configured to control the rear hydraulic circuit (83) and/or the front hydraulic circuit (82) to carry out the braking action depending on the needs or conditions of motion or parking of the vehicle.

4. Tractor (1) according to any one of the preceding claims, further comprising an auxiliary hydraulic circuit (10) connectable to a trailer for transmitting the braking action thereto, wherein said auxiliary hydraulic circuit (10) is operatively connected to the front hydraulic circuit (82) and the rear hydraulic circuit (83).

5. Tractor (1) according to claim 4, wherein the valve group (9) is fluidly connected to the auxiliary hydraulic circuit (10) so as to receive the actuation of the pedal group (7) and to transmit the braking action to the auxiliary hydraulic circuit (10) using the hydraulic actuation of the front hydraulic circuit (82) or that of the rear hydraulic circuit (83) whichever is larger.

6. Tractor (1) according to any one of the preceding claims, wherein the pedal group (7) comprises a single brake pedal (70) operatively connected to the valve group (9).

7. Tractor (1) according to any one of the preceding claims, further comprising parking brake means (11) operating with the drive system (4) to prevent the transmission of motion to the front wheel groups (21, 22) and rear wheel groups (31, 32).

8. Tractor (1) according to claim 7, wherein the drive system (4) comprises a drive shaft (40) operatively connected to the front wheel groups (21, 22) and rear wheel groups (31, 32), wherein the parking brake means (11) comprise a control element
(110), for example a button or lever, actuatable by the user, a drum group (111), engaged with the drive shaft (40), wherein upon actuation of the control element (110) the drum group (111) is configured in a closed configuration which prevents the drive shaft (40) from rotating.

9. Tractor (1) according to claim 8, wherein said parking brake means (11) comprise a hydraulic parking circuit (112), and wherein the drum group (111) is controlled to an open position by a hydraulic action of the hydraulic parking circuit (112) and is controllable to a closed position when the hydraulic action of the hydraulic circuit (112) is absent.

10. Tractor (1) according to any one of the preceding claims, further comprising a control system (20) that comprises a control unit (200).

11. Tractor (1) according to claim 10 in combination with claim 6, wherein the control system (20) comprises at least two pedal position sensors (277) engaged with the pedal group (7) suitable for operating in parallel to detect pressure on the single pedal (70).

12. Tractor (1) according to claim 10 or claim 11, wherein the control system (20) also comprises pressure sensors (280) suitable for detecting the pressure of the front hydraulic circuit (82) and the pressure of the rear hydraulic circuit (83).

13. Tractor (1) according to any one of claims 10 to 12, wherein the control system (20) also comprises at least one speed sensor (290).
